# EUROPEAN PATENT APPLICATION

(11) **EP 1 650 825 A1**
(43) Date of publication of application: **26.04.2006**
(21) Application number: 04748170.0
(22) Date of filing: 27.07.2004
(51) Int. Cl.: H01M 8/24, H01M 8/02, H01M 8/12

(54) **FUEL CELL STACK, FUEL CELL SYSTEM, AND METHOD FOR PRODUCING FUEL CELL STACK**

(30) Priority: 31.07.2003 JP 2003204734
(71) Applicant: Toyota Jidosha Kabushiki Kaisha, Toyota-shi, Aichi 471-8571 (JP)
(72) Inventor: Tano, Yutaka, Toyota-shi, Aichi 4718571 (JP); Kimura, Kenji, Toyota-shi, Aichi 4718571 (JP); Sato, Hiromichi, Toyota-shi, Aichi 4718571 (JP); Numata, Koichi, Toyota-shi, Aichi 4718571 (JP); Ito, Naoki, Toyota-shi, Aichi 4718571 (JP)
(74) Representative: TBK-Patent
(86) International application number: PCT/JP2004/011015
(87) International publication number: WO 2005/013405

(57) **Abstract**

The technique of the invention prepares a thin electrolyte layer without causing cracks. An electrolyte membrane (30) includes a dense inorganic electrolyte layer (36) formed on a dense base member (31). Each unit fuel cell includes the electrolyte membrane (30), a fuel electrode (34), and an oxygen electrode (38). Multiple unit fuel cells are laminated in series to complete a fuel cell stack.

## Description

### TECHNICAL FIELD

The present invention relates to a fuel cell stack, a fuel cell system including the fuel cell stack, and a manufacturing method of the fuel cell stack.

### BACKGROUND ART

A known fuel cell includes a hydrogen separation layer formed on an electrolyte layer of a solid polymer electrolyte membrane as disclosed in JP 10-294117A. The hydrogen separation layer has low gas permeability and controls the amount of gas permeation to a low level even in the presence of holes (hereafter referred to as 'cracks') in the electrolyte layer. This structure thus allows a sufficiently thin electrolyte layer.

The cracks appearing in the conventional thin electrolyte layer, however, increases the membrane resistance and undesirably lowers the performance of the fuel cell.

### DISCLOSURE OF THE INVENTION

The object of the invention is thus to eliminate the drawback of the prior art technique and to prepare a thin electrolyte layer without causing cracks.

In order to attain at least part of the above and the other related objects, the present invention is directed to a fuel cell stack including a lamination of multiple unit fuel cells. Each unit fuel cell has: an electrolyte membrane having a base member composed of a dense hydrogen permeable material and a dense inorganic electrolyte layer formed on at least one face of the base member; a fuel electrode that is located on one face of the electrolyte membrane and receives a supply of a hydrogen-containing fuel gas; and an oxygen electrode that is located on the other face of the electrolyte membrane and receives a supply of an oxygen-containing oxidizing gas.

In the fuel cell stack of the invention, the integrated structure of the dense inorganic electrolyte layer and the dense base member effectively allows sufficient reduction of the thickness of the electrolyte layer without causing cracks of the electrolyte layer. This arrangement desirably reduces the membrane resistance of the electrolyte layer. The resulting fuel cell stack including high-temperature fuel cells is thus capable of operating in a relatively low working temperature range. Lamination of the multiple unit fuel cells desirably enhances the total power output of the fuel cell stack.

The electrolyte layer may be made of a ceramic material, for example, a solid oxide material like BaCeO₃ or SrCeO₃, or may be made of a solid polymer material or another electrolyte. The base member may be made of a metal material having hydrogen permeability, for example, any of vanadium, niobium, tantalum, various alloys containing at least part of these elements, as well as noble metals like palladium or noble metal alloys like palladium alloys. The electrolyte layer may be formed on only one single face of the base member or on both faces of the base member.

In one preferable embodiment of the invention, the fuel cell stack further includes: a separator that is interposed between each pair of adjacent unit fuel cells; and a gasket that is in contact with the separator and forms a flow path to supply the oxidizing gas to the oxygen electrode. The flow path includes a conductive element that keeps an opening of the flow path and functions to collect power on the oxygen electrode.

In this preferable structure, the combination of the gasket and the separator readily defines the flow path of the oxidizing gas, while the conductive element effectively collects power on the oxygen electrode.

In the fuel cell stack equipped with the separator, the gasket, and the conductive element, it is preferable that the conductive element is a metal member formed in an elastically deformable shape by application of an external force in a laminating direction of the multiple unit fuel cells.

The electrolyte layer and the other layers of the electrolyte membrane are all extremely thin. A metal is to be in contact with the electrolyte membrane for collection of power. The durability of the electrolyte membrane is affected by the crush of the gasket. In this preferable structure, however, the conductive element is elastically deformable to effectively absorb the pressure by the crush of the gasket. Namely the conductive element does not damage the electrolyte membrane.

The metal member may be a thin metal plate. The thin metal plate may be corrugated. This simple structure attains the power collection function and the elastic deformation.

The metal member may otherwise be a thin metal wire or a metal sponge obtained by weaving and tangling the thin metal wires. This simple structure attains the power collection function and the elastic deformation.

It is preferable that the conductive element is the metal member with a surface processed to have an antioxidant property. This structure desirably prevents the conductive element from being oxidized by the flow of the oxidizing gas through the flow path.

The gasket may be made of an insulating material. The insulation of the gasket effectively prevents release of electrons from the gasket and thereby accelerates the reactions on the respective electrodes.

In one preferable embodiment of the invention, the fuel cell stack further includes a separator that is interposed between each pair of adjacent unit fuel cells, is protruded outside from the electrolyte membrane, and is made of a material having a high thermal conductivity to make the protrusion function as a radiation fin. This embodiment does not require a complicated independent cooling unit in the fuel cell stack and thus desirably simplifies the general structure of the fuel cell stack.

The fuel cell stack of the above embodiment may further include: an insulating casing that covers over the fuel cell stack; and a cooling medium flow path that is integrated with the casing to form a passage of a cooling medium in the protrusion of the separator. The integration of the casing and the cooling medium flow path further simplifies the general structure of the fuel cell stack.

In the fuel cell stack of the invention, it is preferable that the base member has the hydrogen permeable material embedded in a punching plate, which is made of a different metal material other than the hydrogen permeable material. This structure reduces the total volume of the hydrogen permeable material, which is surrounded by the different metal material. The reduced volume of the hydrogen permeable material effectively avoids potential expansion of hydrogen in the base member and thereby prevents the base member from being peeled off.

The base member may be made of a mixture of the hydrogen permeable material and stainless steel. The base member may otherwise be made of a mixture of the hydrogen permeable material and copper. Both stainless steel and copper are adequately mixed with the hydrogen permeable material not to make poor-quality alloys and are thus excellent as the different metal material to be blended with the hydrogen permeable material.

In the structure of the above embodiment having the separator that is interposed between each pair of adjacent unit fuel cells, is protruded outside from the electrolyte membrane and is made of the material having a high thermal conductivity to make the protrusion function as a radiation fin, the fuel cell system may further include: a cooling medium supply conduit that supplies a cooling medium to the protrusion of the separator; and a cooling heating switchover module that switches over the cooling medium supplied through the cooling medium supply conduit to a heating medium.

This simple structure supplies the flow of the cooling medium to the protrusion of the separator, so as to enhance the cooling efficiency. The cooling medium may be switched over to the heating medium according to the requirements. This simple structure enhances the activation performance in a cold environment.

The present invention is also directed to a manufacturing method of a fuel cell stack. The manufacturing method includes the steps of: (a) providing a metal separator to connect a pair of adjacent unit fuel cells in series; (b) bonding a base member made of a dense hydrogen permeable material to the metal separator; (c) forming a dense inorganic electrolyte layer on at least one face of the base member; (d) bonding another metal separator, which has a different polarity from a polarity of the metal separator bonded to the base member in the step (a), to an outer face of the electrolyte layer, so as to complete one unit fuel cell; (e) repeating the steps (a) through (d) to form multiple unit fuel cells and laminating the multiple unit fuel cells; and (f) clamping the lamination of the multiple unit fuel cells by a clamping member.

This manufacturing method of the invention readily manufactures the fuel cell stack having a sufficiently thin electrolyte layer without preventing the occurrence of cracks. This arrangement desirably reduces the membrane resistance of the electrolyte layer. The resulting fuel cell stack including high-temperature fuel cells is thus capable of operating in a relatively low working temperature range.

### BRIEF DESCRIPTION OF THE DRAWINGS

Fig. 1 schematically illustrates the structure of a fuel cell stack 1 in a first embodiment of the invention;
Fig. 2 schematically illustrates the structure of each unit fuel cell of the fuel cell stack 1;
Fig. 3 shows the structure of a casing 60;
Fig. 4 is a flowchart showing a manufacturing process of the fuel cell stack 1;
Fig. 5 is a table showing various layered structures of an electrolyte membrane as possible modifications;
Fig. 6 shows the structure of a conductive element 224 in one modified example;
Fig. 7 is a plan view showing the structure of a plate 231 as a base member in another modified example;
Fig. 8 shows the structure of a fuel flow path and an air flow path formed in grooved metal separators in still another modified example;
Fig. 9 shows the structure of a cooling gas flow path arranged in a core assembly in another modified example;
Fig. 10 schematically illustrates the structure of a fuel cell system 500 in a second embodiment of the invention; and
Fig. 11 is a flowchart showing a start control routine.

### BEST MODES FOR CARRYING OUT THE INVENTION

Some modes of carrying out the invention are described below as preferred embodiments, in order to clarify the features, aspects, and effects of the invention.

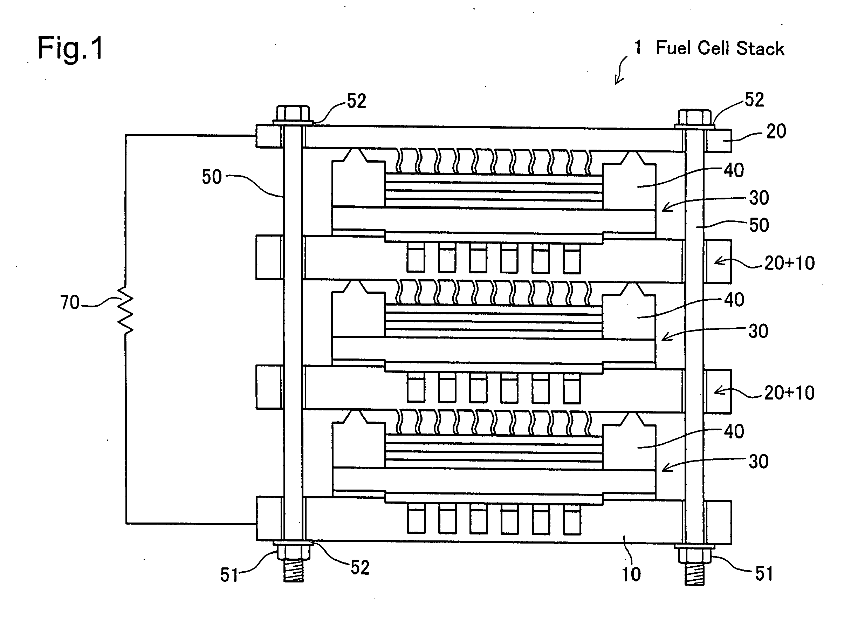

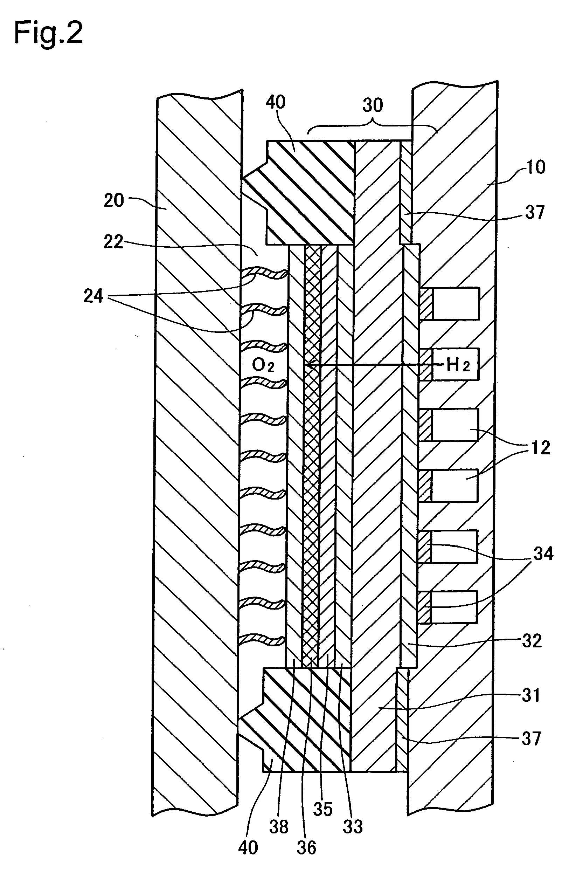

Fig. 1 schematically illustrates the structure of a fuel cell stack 1 in a first embodiment of the invention. Fig. 2 schematically illustrates the structure of each unit fuel cell of the fuel cell stack 1. The unit fuel cell of this embodiment belongs to solid oxide fuel cells. The structure of the unit fuel cell (hereafter referred to as the unit cell) is described first with reference to the sectional view of Fig. 2. The unit cell mainly includes an electrolyte membrane 30 placed between two metal separators 10 and 20.

One metal separator 10 has a flow path 12 for a supply of hydrogen-rich fuel gas, which includes multiple straight grooves extended in a direction perpendicular to the sheet surface of Fig. 2. The other metal separator 20 has a flow path 22 for a supply of the air as an oxidizing gas. The flow path 22 is formed in a space defined by the metal separator 20, the electrolyte membrane 30, and gaskets 40. The metal separators 10 and 20 are made of a metal material and are preferably composed of a metal having high thermal conductivity, for example, copper or aluminum. The gaskets 40 are made of an insulating material, for example, a rubber material, a plastic material, or a high heat-resistant fiber material partially impregnated with rubber. The flow path 22 is divided into multiple flow passages by metal plates 24 as discussed later.

The electrolyte membrane 30 has a six-layered structure including a dense base member 31 of vanadium (V). The base member 31 is interposed between two dense metal diffusion control layers 32 and 33, which are further sandwiched by two palladium (Pd) coats 34 and 35. The material of the base member 31 is not restricted to vanadium but may be any of dense hydrogen-permeable materials including vanadium alloys like vanadium-cupper (Cu) alloy and vanadium-nickel (Ni) alloy, noble metals like palladium, noble metal alloys like palladium alloys, and 5A elements like niobium (Nb) and tantalum (Ta). The coats 34 and 35 may be made of a Pd-Ag alloy having catalytic function, instead of Pd. The coat 34 formed on the side of the metal separator 10 as the fuel electrode is divided into islands to be placed in the respective grooves of the flow path 12 in the metal separator 10.

The metal diffusion control layers 32 and 33 are made of tungsten oxide (WO₃) and function to control mutual metal diffusion between the base member 31 and the coats 34 and 35. Available materials of the metal diffusion control layers 32 and 33 other than tungsten oxide include proton conductors, mixed conductors, ceramics, as well as their composite materials and graded materials, for example, zirconium oxide, molybdenum oxide, and Y₂O₃SiO₂.

A thin film of electrolyte layer 36 is formed outside the coat 35 on the side of the metal separator 20. The electrolyte layer 36 is made of a perovskite complex oxide (ABO₃), such as BaCeO₃ or SrCeO₃ as a solid oxide having proton conductivity. The material of the electrolyte layer 36 is not restricted to the perovskite complex oxide but may be any of dense inorganic electrolyte materials including other solid oxides having proton conductivity, for example, pyrochlore complex oxides (A₂B₂O₇) and spinel complex oxides (ABO₄).

In the structure of the embodiment, the thicknesses of the base member 31, the metal diffusion control layers 32 and 33, the Pd coats 34 and 35, and the electrolyte layer 36 are respectively equal to 100 µm, 1 µm, 0.75 µm, and 0.1 µm. The thicknesses of the respective layers are not restricted to these values but may be set arbitrarily. The base member 31 is brazed with the metal separator 10 via brazed layers 37.

An electrode 38 is formed on the outer face of the electrolyte layer 36. The electrode 38 is made of porous metal foam or metal mesh plate. A catalyst, for example, palladium (Pd) or platinum (Pt), is supported on the electrode 38 to accelerate the reaction in the power generation process. The thickness of the electrode 38 is in a range of several tens to several hundreds µm.

The air flow path 22 is placed on the outer face of the electrode 38 and is divided into multiple flow passages by a number of metal plates 24. Each of the metal plates 24 is a corrugated thin plate having one end face in the longitudinal direction brazed to the plane of the metal separator 20 facing the electrolyte membrane 30 and bringing the other end in contact with the outer face of the electrode 38. The metal plates 24 of this structure function to collect power on the oxide electrode. The metal plates 24 are only in contact with the outer face of the electrode 38 and are not bonded in this structure of the embodiment, although the metal plates 24 may be brazed or otherwise bonded to the outer face of the electrode 38. The metal plates 24 are made of, for example, wire mesh, sintered body, or non-woven fabric having electron conductivity and have a thickness of, for example, 0.5 mm. The surfaces of the metal plates 24 are plated or otherwise processed for antioxidation. The antioxidation process effectively prevents the oxidation of the metal plates 24 with the air flowing through the flow path 22.

In the power generation process of the unit cell constructed as discussed above, hydrogen included in a supply of fuel gas to the flow path 12 of the metal separator 10 is dissociated into proton and electron. The proton moves through the electrolyte layer 36 and is bonded to oxygen to produce water on the electrode 38. Combination of hydrogen with oxygen generates water and electricity. In the unit cell of the above structure, the metal separator 10 with the flow path 12 for the fuel gas corresponds to the fuel electrode, and the electrode 38 corresponds to the oxygen electrode.

The fuel cell stack 1 includes multiple unit cells laid one upon another. As shown in Fig. 1, in the fuel cell stack 1, multiple unit cells, each including the metal separator 10, the electrolyte membrane 30 (including the gaskets 40), and the metal separator 20, are stacked in this order in layers. The metal separator 10 as the hydrogen electrode and the metal separator 20 as the oxygen electrode are integrated as an integral metal separator between adjoining unit cells. The fuel cell stack 1 typically includes 100 to 400 unit cells, although the illustration includes only 3 unit cells.

The metal separators 10 and 20 are protruded outside from the structural body of the electrolyte membranes 30 and the gaskets 40. The metal separators 10 and 20 have bolt holes and are clamped to one another by means of bolts 50 inserted through the bolt holes. An insulating collar (not shown) is placed between each bolt 50 and the corresponding bolt hole. An insulating washer 52 is placed below the head of each bolt 50 and below each nut 51. These ensure insulation between the metal separators 10 and 20.

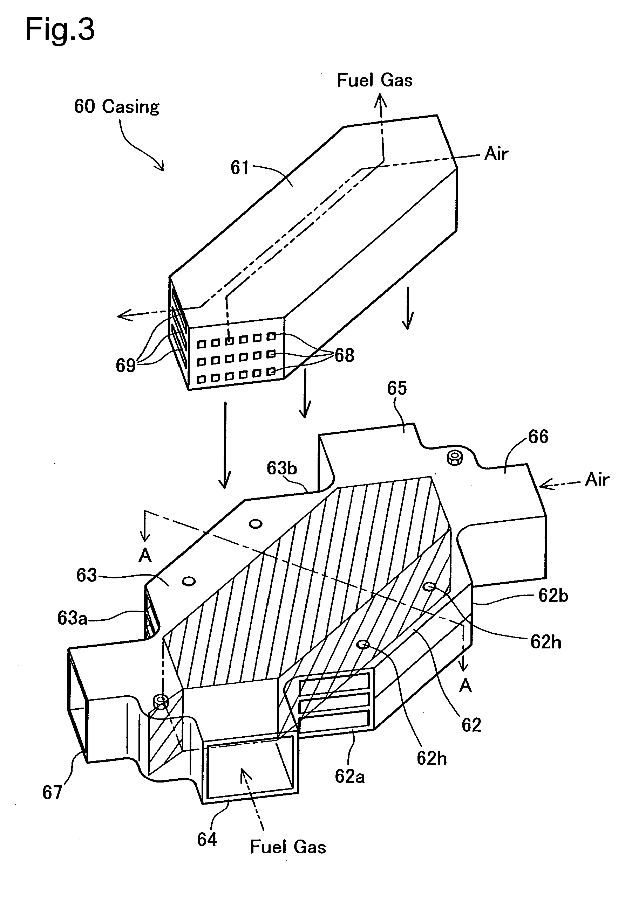

The fuel cell stack 1 is covered over a casing 60 with flow path manifolds. Fig. 3 shows the structure of the casing 60. In the illustration, a core assembly 61 is hypothetically drawn out of the casing 60. The casing 60 is made of an insulating material, such as stainless steel (SUS) and includes the hexagonal core assembly 61, cooling gas flow paths 62 and 63 provided on both sides of the core assembly 61, a fuel gas inlet 64 and a fuel gas outlet 65 provided respectively on the front and the back of the core assembly 61, and an air inlet 66 and an air outlet 67 provided respectively on the back and the front of the core assembly 61.

The casing 60 has two separate parts, an upper section and a lower section. The fuel cell stack 1 is interposed between these two separate parts and is received in the casing 60. The electrolyte membranes 30 and the gaskets 40 are placed inside the core assembly 61, while the extensions of the metal separators 10 and 20, that is, the protrusions from the electrolyte membranes 30 and the gaskets 40, are placed in the cooling gas flow paths 62 and 63. The fuel cell stack 1 is placed in the casing 60 to have the sectional face of Fig. 1 (with omission of the casing 60) taken on the line A-A in Fig. 3. The cooling gas flow paths 62 and 63 have holes 62h to receive the bolts 50 of the fuel cell stack 1 therein. The protrusions of the metal separators 10 and 20 are completely extended into the cooling gas flow paths 62 and 63. The bolts 50 inserted through the holes 62h clamp and fix the upper and lower sections of the casing with the fuel cell stack 1.

The cooling gas flow paths 62 and 63 have front inlets 62a and 63a and rear outlets 62b and 63b. The inlets 62a and 63a and the outlets 62b and 63b have a number of openings corresponding to the number of laminated unit cells in the fuel cell stack 1. The flow of cooling gas is branched by the openings of the inlets 62a and 63a, runs through the protrusions of the metal separators 10 and 20 in the fuel cell stack 1, and is discharged from the outlets 62b and 63b. The protrusions thus function as radiation fins to blow the cooling gas.

The fuel gas inlet 64 and the fuel gas outlet 65 are respectively placed on the right front and on the left back. The air inlet 66 and the air outlet 67 are respectively placed on the right back and on the left front. In the structure of the core assembly 61, the flow of the fuel gas is branched by branch passages 68 corresponding to the multiple grooves of the flow path 12 formed in the metal separator 10. The flow of the air is branched by branch passages 69 corresponding to the multiple flow passages of the flow path 22 formed in the metal separator 20. The flow of the fuel gas and the flow of the air run through the fuel cell stack 1 to cross each other at different heights in the core assembly 61. The fuel gas flow and the air flow are counter currents; the fuel gas flows from the front to the back, while the air flows from the back to the front. In a modified structure, the positions of the air inlet and the air outlet may be inverted on the front and on the back of the core assembly 61 (alternatively the positions of the fuel gas inlet and the fuel gas outlet may be inverted on the back and on the front of the core assembly 61). In this modified structure, the fuel gas flow and the air flow are parallel currents flowing in an identical direction. The residual faces of the core assembly 61 other than the faces with the branch passages 68 and 69 are covered with an insulator mat (alumina mat, shown as a hatched area) for gas seal and support of the core assembly 61.

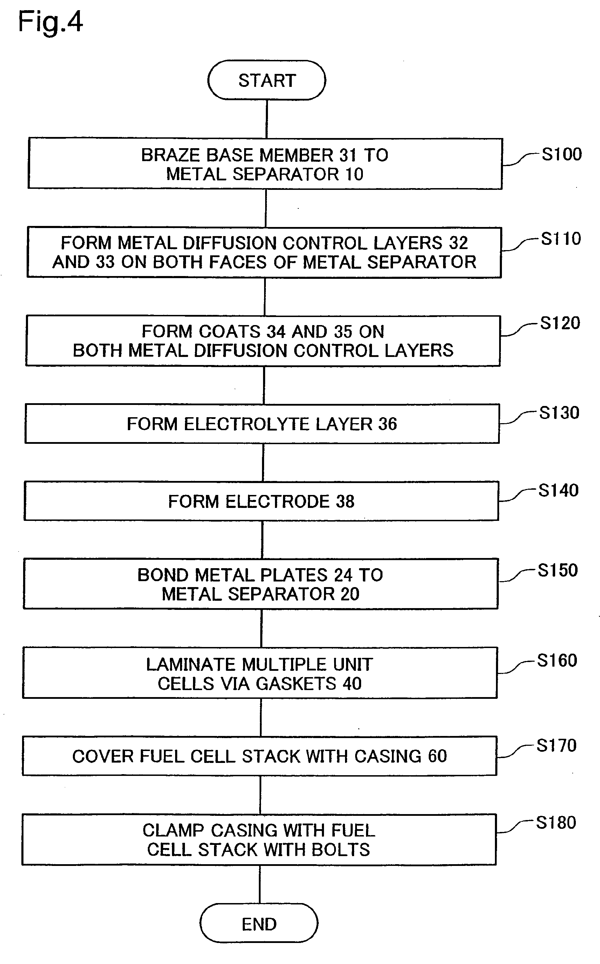

Fig. 4 is a flowchart showing a manufacturing process of the fuel cell stack 1. The manufacturing process first brazes the base member 31 to the metal separator 10 as the hydrogen electrode (step S100). The circumferential part on a single face of the base member 31 is brazed to the metal separator 10 (see the brazed layers 37 in Fig. 2). The single face of the base member 31 accordingly has a shallow gap between the brazed layers 37. The manufacturing process then forms the metal diffusion control layers 32 and 33 on both faces of the base member 31 (step S110). The metal diffusion control layers 32 and 33 may be plated, ion-plated, or deposited on the two faces of the base member 31. The metal diffusion control layer 32 is formed in the shallow gap on the single face of the base member 31 on the side of the metal separator 10.

The manufacturing process plates the respective outer faces of the metal diffusion control layers 32 and 33 with the Pd coats 34 and 35 (step S120). The coat 34 is placed in the multiple grooves of the flow path formed in the metal separator 10.

The manufacturing process subsequently forms the electrolyte layer 36 on the outer face of the coat 35 on the side of the metal separator 20 (step S130). The electrolyte layer 36 is formed by accumulating an electrolyte by any of diverse techniques, for example, physical deposition, chemical deposition, or sputtering. The dense base member 31 allows formation of the sufficiently thin electrolyte layer 36. The manufacturing process further forms the electrode 38 on the outer face of the electrolyte layer 36 (step S140). The electrode 38 may be formed by any of diverse techniques, physical deposition, chemical deposition, or sputtering. A large number of the metal plates 24 are then brazed and bonded to the metal separator 20 as the oxygen electrode (step S150).

The processing of steps S100 to S150 completes one unit cell. Multiple unit cells are laminated with interposition of the gaskets 40 to be in contact with the respective base members 31 (step S160). The manufacturing process then covers the laminate with the casing 60 via the insulating mat (step S170). The laminate covered with the casing 60 is clamped with the bolts 50, the nuts 51, the insulating washers 52, and the insulating collar (step S180). This completes the fuel cell stack 1. In use of this fuel cell stack 1, an electric load 70 is connected between the lower-most metal separator 10 and the upper-most metal separator 20 (see Fig. 1).

In the fuel cell stack 1 described above, the integrated structure of the dense inorganic electrolyte layer 36 and the dense base member 31 allows sufficient reduction of the thickness of electrolyte layer 36 while preventing the occurrence of cracks in the electrolyte layer 36. This arrangement desirably reduces the membrane resistance of the electrolyte layer 36 and lowers the working temperature of the solid oxide fuel cells to, for example, a range of 400 to 600°C. The serial lamination of the multiple unit fuel cells effectively enhances the total output power of the fuel cell system.

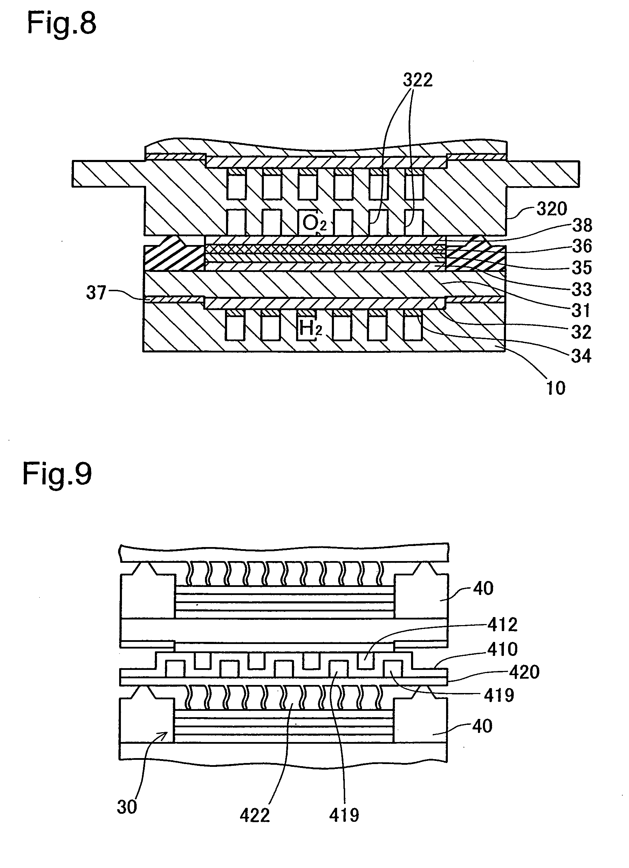

In the structure of this embodiment, the gaskets 40 and the metal separator 20 readily define the air flow path 22. In a conventional structure, the metal separator 20 has multiple grooves like the metal separator 10 of the hydrogen electrode to receive electrons from the flat electrode 38. In the conventional structure with the gaskets 40 on the circumference of the electrolyte membrane 30 (this is equivalent to the structure of a modified example shown in Fig. 8), the gaskets 40 are crashed by clamping of the fuel cell stack 1 with the bolts 50. The ribs between the grooves of the flow path in the metal separator 10 are then pressed against the electrode 38. This may damage the electrode 38 and the electrolyte layer 36. In the structure of this embodiment, on the other hand, the corrugated thin metal plates 24 are deformed to exert the spring-like functions against the clamping pressure in the clamping direction of the fuel cell stack 1, that is, in the laminating direction of the unit cells. The metal plates 24 accordingly absorb the clamping pressure to protect the electrolyte layer 36 and the electrode 38 from potential damages.

The metal plates 24 are corrugated in the structure of the first embodiment. The corrugated shape is, however, not restrictive, and the metal plates 24 may be formed in any elastically deformable shape against the pressure in the laminating direction of the fuel cell.

In the structure of the embodiment, the gaskets 40 are made of the insulating material and do not allow release of electrons. This arrangement ensures the reactions on the respective electrodes.

In the structure of this embodiment, the metal separators 10 and 20 placed on the border of each pair of adjacent unit cells are protruded from the electrolyte membrane 30 and the gaskets 40 and are made of a material having a high thermal conductivity, for example, copper or aluminum. These protrusions thus function as radiation fins and desirably simplify the structure with no requirement of a complicated cooling mechanism inside the fuel cell stack 1. The shape of the casing 60 allows the protrusions of the metal separators 10 and 20 to be directly exposed to the cooling gas. This simple structure enhances the cooling efficiency.

Some possible modifications of the first embodiment are described below.

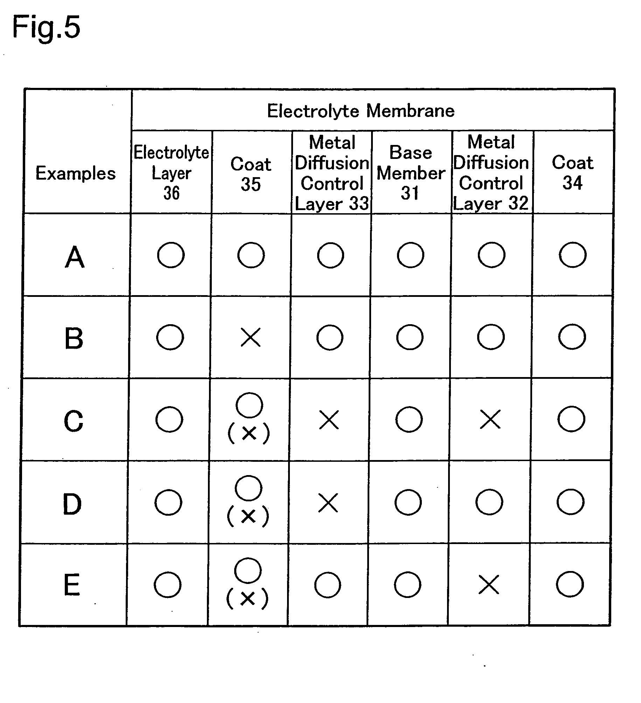

Fig. 5 is a table showing various layered structures of the electrolyte membrane as possible modifications. Example A corresponds to the structure of the embodiment (shown in Fig. 2). In the structure of Example A, the base member 31 is interposed between the metal diffusion control layers 32 and 33 and further covered with the Pd coats 34 and 35, and the electrolyte layer 36 is formed on the Pd coat 35 on the side of the oxygen electrode.

In the fuel cell stack 1 of the first embodiment, the electrolyte membrane of each unit cell is required to have a base member of a dense hydrogen permeable material and an electrolyte layer. The structure of Example B excludes the coat 35 on the side of the oxygen electrode. The coat 34 on the side of the fuel electrode also functions to dissociate hydrogen of the fuel gas into proton and electron. The proton moves through the electrolyte layer 36 to trigger the cell reaction.

Both the metal diffusion control layers 32 and 33 may be omitted as the structure of Example C. Either one of the metal diffusion control layers 32 and 33 may be omitted as the structure of Examples D and E. The metal diffusion control layers 32 and 33 are interposed to prevent mutual metal diffusion between the Pd coats 34 and 35 and the base member 31. The metal diffusion control layers 32 and 33 may thus be omitted when some metal diffusion is allowable. The coat 35 included in the structures of Examples C to E may be omitted like the structure of Example B.

The electrolyte membrane may include electrolyte layers formed on both faces of the base member made of the dense hydrogen permeable material. An additional electrolyte layer, which is identical with the electrolyte layer 36, is formed between the base member 31 and the metal diffusion control layer 32 in the structure of the embodiment. This modified structure also sufficiently reduces the thickness of the electrolyte layers and lowers the working temperature of the solid oxide fuel cells.

In the structure of the first embodiment, the electrolyte layer 36 made of the solid oxide is formed on the outer face of the coat 35 on the side of the metal separator 20. One modified procedure may apply a thin film of the electrolyte layer 36 onto the coat 35. In this modification, the integrated structure of the dense membrane 31 and the thin film of the electrolyte layer 36 sufficiently reduces the thickness of the electrolyte layer 36.

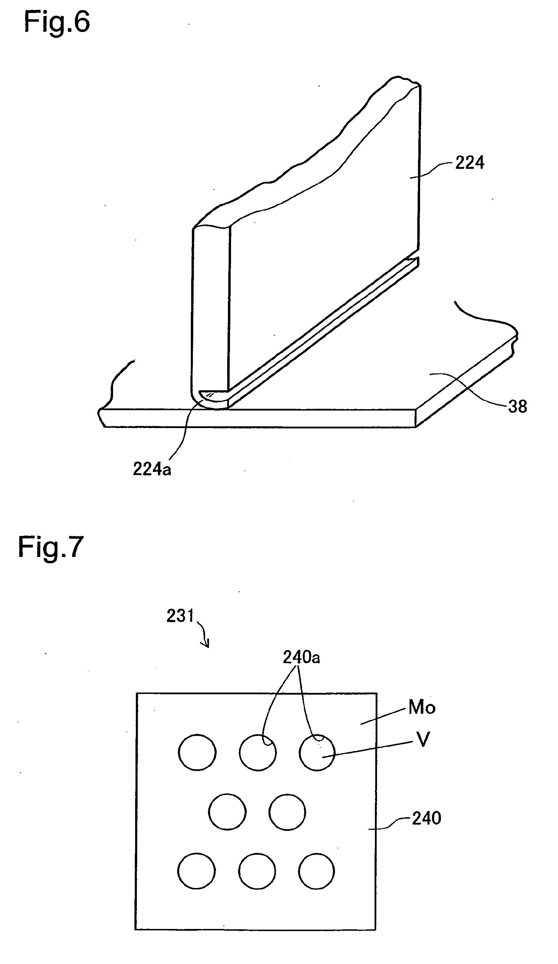

In the structure of the first embodiment, the metal plates 24 as the conductive element are corrugated for easy elastic deformation. In one modified structure, the corrugated metal plates 24 may be replaced by flat metal plates with spring mechanisms on the respective ends to be in contact with the electrode 38. These spring mechanisms are elastically deformable by an external force in the laminating direction of the unit cells. Fig. 6 shows a conductive element 224 of this modified structure. The conductive element 224 has a hook end 224a that is in contact with the electrode 38 and functions as a leaf spring. In this modified structure, the hook end 224a of the conductive element 224 is deformed to have the spring-like functions by the clamping pressure in the laminating direction of the unit cells. This arrangement effectively absorbs the clamping pressure and thus protects the electrolyte layer 36 and the electrode 38 from potential damages.

In the structure of the first embodiment, the thin metal plates 24 are used as the conductive element. The conductive element may alternatively be a metal thin wire that is made of, for example, nickel or stainless steel (SUS) and has a diameter of, for example, 0.1 mm. A large number of metal thin wires are spanned between the metal separator 20 and the electrode 38. The metal thin wires are preferably bent in a wavy form, like the metal plates 24 of the embodiment. The surfaces of the metal thin wires are preferably processed to have anti-oxidant property.

Another modified structure may exclude the metal plates 24 and fill the air flow path 22 surrounded by the gaskets 40 with metal sponge obtained by weaving or tangling the metal thin wires. The metal sponge effectively absorbs the clamping pressure in the laminating direction of the unit cells and desirably protects the electrolyte layer 36 and the electrode 38 from potential damages. The surfaces of the metal thin wires of the metal sponge are preferably processed to have anti-oxidant property. The conductive elements of the first embodiment and these modified examples sufficiently hold the opening of the air flow path 22.

In the first embodiment and its modified examples, the flat electrode 38 is formed on the surface of the electrolyte layer 36 and is brought into contact with the conductive element to collect electric power to the metal separator 20. One modified structure may omit the electrode 38 and make the conductive element directly exposed to the electrolyte layer 36. The conductive element is made of a thin plate or a thin wire and is formed in a spring-like shape as described previously. There is thus little possibility that the direct exposure of the conductive element to the electrolyte layer 36 damages the electrolyte layer 36. In another modified structure that more effectively prevents a potential damage, a punching metal plate is placed on the surface of the electrode 38 on the side of the metal separator 20, and the conductive element is brought into contact with this punching metal plate.

The gaskets 40 in the structure of the first embodiment are not restricted to the shape of Fig. 2 but may have any of various shapes attaining the sufficient shielding performance in the air flow path 22.

In the structure of the first embodiment, the base member 31 is made of the dense hydrogen permeable material. The hydrogen permeable material is expanded during permeation of hydrogen and is contracted during non-permeation of hydrogen. The frequent expansion and contraction by the repeated system activation and inactivation may peel off the base member 31. Some available structures to eliminate this drawback are given below as modified examples.
(a) A first modified example embeds the hydrogen permeable material in a punching plate to form a base member. Fig. 7 is a plan view of a plate member 231 as the base member of this structure. The plate member 231 includes a punching plate 240 made of a metal material, for example, molybdenum (Mo) or tungsten (W), having a higher melting point than that of vanadium (V). Holes 240a of the punching plate 240 are filled with vanadium (V). The manufacturing procedure provides the punching plate 240 of the metal material, embeds vanadium (V) into the holes 240a of the punching plate 240 by the hot isostatic pressing technique (HIP), and fires the punching plates 240. This method enables the holes 240a of the punching plate 240 to be tightly filled with vanadium (V). The plate member 231 reduces the area of the hydrogen permeable material and makes the hydrogen permeable material surrounded by another metal. This arrangement effectively prevents the potential hydrogen expansion of the base member.
(b) A second modified example embeds vanadium (V) powder in a punching plate of stainless steel (SUS) and presses the V-embedded punching plate by the hot isostatic pressing technique (HIP) to form a base member. Like the first modified example (a), this modified structure reduces the area of the hydrogen permeable material and makes the hydrogen permeable material surrounded by another metal. This arrangement effectively prevents the potential hydrogen expansion of the base member. The material of the punching plate is not restricted to stainless steel SUS but may be another metal, such as Cu, that is different from the hydrogen permeable material.
(c) A third modified example envelope-casts vanadium (V) thin wires with SUS and rolls the SUS-cast V thin wires to form a base member. The manufacturing procedure provides a V pin holder, embeds a metal material (for example, SUS or Cu) having a lower melting point than that of V into the gaps of the V pin holder, and casts and rolls the metal-embedded V pin holder to complete the base member. This modified structure reduces the area of the hydrogen permeable material and makes the hydrogen permeable material surrounded by another metal. This arrangement effectively prevents the potential hydrogen expansion of the base member.
(d) A fourth modified example mixes Cu and V to make large Cu particles surrounded by small V particles and presses the mixture by the hot isostatic pressing technique (HIP) to form a base member. This structure exerts the similar effects to those of the third modified example.
(e) In the modified examples (c) and (d), the base member is made from the mixture of the hydrogen permeable material and the stainless steel and from the mixture of the hydrogen permeable material and copper. These mixtures may be formed to the base member by different methods from those of the modified examples (c) and (d). Both stainless steel and copper are adequately mixed with the hydrogen permeable material not to make poor-quality alloys and are thus excellent as the different metal material to be blended with the hydrogen permeable material.

In the structure of the first embodiment, the air flow path 22 is formed in the space defined by the metal separator 20, the electrolyte membrane 30, and the gaskets 40. The air fuel path may alternatively be formed by multiple grooves formed in the metal separator, in the same manner as the fuel flow path 12. Fig. 8 shows the structure of a fuel flow path and an air flow path formed in grooved metal separators in still another modified example. In this illustrated structure, a metal separator 320 on the side of the oxygen electrode has multiple straight grooves 322, like the metal separator 10 on the side of the oxygen electrode. Ribs between the grooves come into contact with the electrode 38 (the like numerals denote the like elements to those of the first embodiment).

The structure of this modified example exerts the similar effects to those of the first embodiment, except the effects of the metal plates 24.

In the structure of the first embodiment, the metal separators 10 and 20 are protruded from the electrolyte membrane 30 and the gaskets 40. The protrusions are extended to be placed in the cooling gas flow paths 62 and 63. In another modified structure shown in Fig. 9, a cooling gas flow path may be located inside the electrolyte membrane 30 and the gaskets 40. In this modified structure, a metal separator 410 for the fuel gas has multiple grooves on both faces thereof to form a fuel gas flow path 412 and a cooling gas flow path 419. The metal separator 410 is brazed and bonded to another metal separator 420 with an air flow path 422. Formation of the cooling gas flow path in the core assembly desirably ensures the total size reduction of the fuel cell stack.

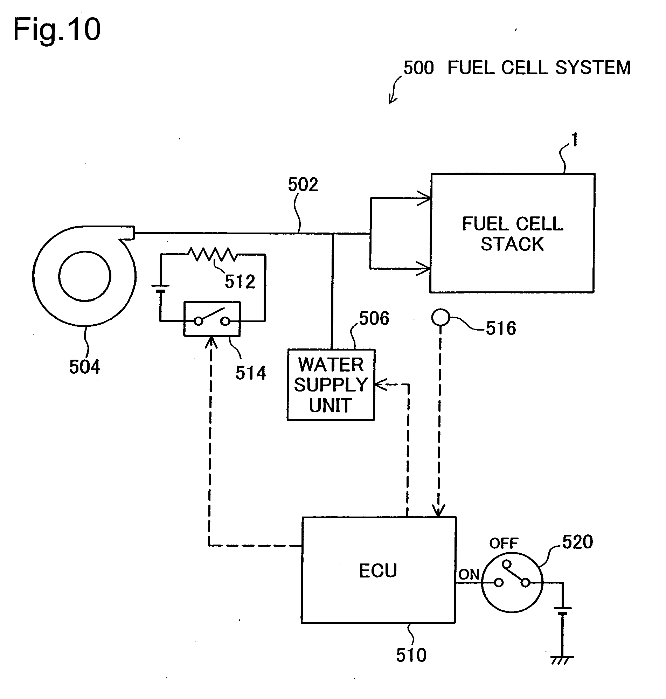

A second embodiment of the invention are described below. The second embodiment regards a fuel cell system including the fuel cell stack 1 described in the first embodiment and a cooling system for the fuel cell stack 1. Fig. 10 schematically illustrates the structure of a fuel cell system 500 in the second embodiment of the invention. The fuel cell system 500 includes the fuel cell stack 1 of the first embodiment. A cooling air supply conduit 502 is connected to the cooling gas inlets 62a and 63a formed on the casing of the fuel cell stack 1. An air blower 504 is connected to the other end of the cooling air supply conduit 502 to make the air flow through the cooling air supply conduit 502 into the fuel cell stack 1.

A water supply unit 506 supplies water to the middle of the cooling air supply conduit 502. The water supply unit 506 receives a control signal from an electronic control unit (ECU) 510 to start and stop the water supply. The supply of water from the water supply unit 506 is flowed as the liquid or mist water content with the air through the cooling air supply conduit 502 into the fuel cell stack 1. These cooling media go through the cooling gas flow paths 62 and 63 of the fuel cell stack 1, where the protrusions of the separators 10 and 20 are placed. The liquid or mist water content in the air is partly or wholly vaporized by the heat of the fuel cell stack 1. The latent heat of vaporization effectively cools down the fuel cell stack 1.

A heater 512 is located in the middle of the cooling air supply conduit 502 to heat up the air flowing through the cooling air supply conduit 502. The heater 512 is connected to a relay 514, which receives a control signal from the ECU 510 to activate and inactivate the heater 512 for heating.

A temperature sensor 516 is attached to a specific site of the fuel cell stack 1 to measure the temperature of the fuel cell stack 1 and send an output signal representing the measured temperature to the ECU 510. The ECU 510 is also connected to a system switch 520, which activates and inactivates the fuel cell system 500 in response to an operator's switch operation. The fuel cell system 500 includes a fuel supply system and an air supply system, which respectively supply the fuel gas and the air to the fuel gas inlet 64 and to the air inlet 66 of the fuel cell stack 1 (see Fig. 3). These systems are omitted from the illustration of Fig. 10. Some load (not shown) is also connected to the fuel cell stack 1.

The ECU 510 is a microcomputer including a CPU, a ROM, and a RAM. The ECU 510 executes a start control routine of the fuel cell system 500.

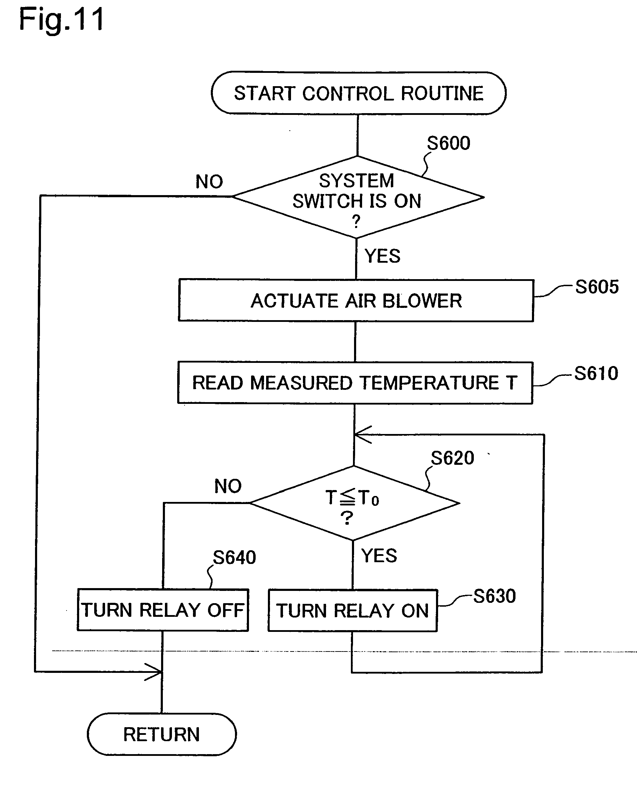

Fig. 11 is a flowchart showing the start control routine, which is executed repeatedly at preset time intervals. In the start control routine, the CPU of the ECU 510 first determines whether the system switch 520 is turned ON (step S600). In response to an ON operation of the system switch 520, the CPU actuates the air blower 504 (step S605), reads a measured temperature T from the temperature sensor 516 (step S610), and determines whether the measured temperature T is not higher than a preset level T0 (for example, 0°C) (step S620).

In an affirmative answer at step S620, that is, when the measured temperature T is not higher than the preset level T0, the CPU turns the relay 514 ON (step S630) and goes back the control routine to step S620. In a negative answer at step S620, that is, when the measured temperature T is higher than the preset level T0, on the other hand, the CPU turns the relay 514 OFF (step S640) and goes to RETURN to exit from this control routine.

In the case of a negative answer at step S600, the start control routine goes to RETURN and is terminated immediately.

The start control routine actuates the air blower 504 in response to an ON operation of the system switch 520 and turns the relay 514 ON to make the heated air flow through the cooling gas flow paths 62 and 63 of the fuel cell stack 1 and thereby heat up the fuel cell stack 1.

According to a non-illustrated control routine, when the temperature T measured by the temperature sensor 516 exceeds a preset reference level T1 (≥ T0), the water supply unit 506 is actuated. At the temperature T over the preset reference level T1, the supply of water from the water supply unit 506 is flowed through the cooling air supply conduit 502 and takes advantage of the latent heat of vaporization to cool down the fuel cell stack 1 as described above.

In the simple structure of the second embodiment, the cooling medium is flowed through the protrusions of the metal separators 10 and 20 in the fuel cell stack 1 to enhance the cooling efficiency. The cooling medium may be switched over to the heating medium according to the requirement. This simple structure thus enhances the activation performance in a cold environment.

The embodiments and their modified examples discussed above are to be considered in all aspects as illustrative and not restrictive. There may be many modifications, changes, and alterations without departing from the scope or spirit of the main characteristics of the present invention. For example, the electrolyte membrane may be replaced by any of other diverse electrolyte membranes, for example, a polymer electrolyte membrane.

## Claims

1. A fuel cell stack comprising a lamination of multiple unit fuel cells,
each unit fuel cell comprising:
an electrolyte membrane having a base member composed of a dense hydrogen permeable material and a dense inorganic electrolyte layer formed on at least one face of the base member;
a fuel electrode that is located on one face of the electrolyte membrane and receives a supply of a hydrogen-containing fuel gas; and
an oxygen electrode that is located on the other face of the electrolyte membrane and receives a supply of an oxygen-containing oxidizing gas.

2. A fuel cell stack in accordance with claim 1, said fuel cell stack further comprising:
a separator that is interposed between each pair of adjacent unit fuel cells; and
a gasket that is in contact with the separator and forms a flow path to supply the oxidizing gas to the oxygen electrode,
wherein the flow path includes a conductive element that keeps an opening of the flow path and functions to collect power on the oxygen electrode.

3. A fuel cell stack in accordance with claim 2, wherein the conductive element is a metal member formed in an elastically deformable shape by application of an external force in a laminating direction of the multiple unit fuel cells.

4. A fuel cell stack in accordance with claim 3, wherein the metal member is a thin metal plate.

5. A fuel cell stack in accordance with claim 4, wherein the metal plate is corrugated.

6. A fuel cell stack in accordance with claim 3, wherein the metal member is a thin metal wire.

7. A fuel cell stack in accordance with claim 6, wherein the metal member is a metal sponge obtained by weaving and tangling the thin metal wires.

8. A fuel cell stack in accordance with any one of claims 3 through 7, wherein the conductive element is the metal member with a surface processed to have an antioxidant property.

9. A fuel cell stack in accordance with any one of claims 2 through 8, wherein the gasket is made of an insulating material.

10. A fuel cell stack in accordance with any one of claims 1 through 9, said fuel cell stack further comprising:
a separator that is interposed between each pair of adjacent unit fuel cells,
wherein the separator is protruded outside from the electrolyte membrane and is made of a material having a high thermal conductivity to make the protrusion function as a radiation fin.

11. A fuel cell stack in accordance with claim 10, said fuel cell stack further comprising:
an insulating casing that covers over said fuel cell stack; and
a cooling medium flow path that is integrated with the casing to form a passage of a cooling medium in the protrusion of the separator.

12. A fuel cell stack in accordance with any one of claims 1 through 11, wherein the base member comprises the hydrogen permeable material embedded in a punching plate, which is made of a different metal material other than the hydrogen permeable material.

13. A fuel cell stack in accordance with any one of claims 1 through 11, wherein the base member is made of a mixture of the hydrogen permeable material and stainless steel.

14. A fuel cell stack in accordance with any one of claims 1 through 11, wherein the base member is made of a mixture of the hydrogen permeable material and copper.

15. A fuel cell stack in accordance with any one of claims 1 through 14, wherein the electrolyte layer is made of a ceramic material.

16. A fuel cell stack in accordance with claim 15, wherein the electrolyte layer is made of a solid oxide material.

17. A fuel cell system comprising a fuel cell stack in accordance with claim 10, said fuel cell system comprising:
a cooling medium supply conduit that supplies a cooling medium to the protrusion of the separator; and
a cooling heating switchover module that switches over the cooling medium supplied through the cooling medium supply conduit to a heating medium.

18. A manufacturing method of a fuel cell stack, said manufacturing method comprising the steps of:
(a) providing a metal separator to connect a pair of adjacent unit fuel cells in series;
(b) bonding a base member made of a dense hydrogen permeable material to the metal separator;
(c) forming a dense inorganic electrolyte layer on at least one face of the base member;
(d) bonding another metal separator, which has a different polarity from a polarity of the metal separator bonded to the base member in said step (a), to an outer face of the electrolyte layer, so as to complete one unit fuel cell;
(e) repeating said steps (a) through (d) to form multiple unit fuel cells and laminating the multiple unit fuel cells; and
(f) clamping the lamination of the multiple unit fuel cells by a clamping member.
